# EUROPEAN PATENT APPLICATION

(11) **EP 1 566 875 A1**
(43) Date of publication of application: **24.08.2005**
(21) Application number: 04290451.6
(22) Date of filing: 19.02.2004
(51) Int. Cl.: H02J 3/14, H02J 13/00

(54) **Energy management method**

(71) Applicant: ALCATEL, 75008 Paris (FR)
(72) Inventor: Weik, Hartmut, Dipl.-Ing., 70195 Stuttgart (DE); Köstering, Nina, Dipl.-Ing. (BA), 70499 Stuttgart (DE); Rupp, Stephan, Dr.-Ing., 74354 Besigheim (DE); Stahl, Uwe, Dipl.-Ing., 71229 Leonberg (DE); Banet, Franz-Josef, Dipl.-Ing., 71665 Vaihingen (DE)
(74) Representative: Zinsinger, Norbert

(57) **Abstract**

The invention concerns a method of managing energy consumed by a group (3) of energy consuming devices (31 to 39) as well as energy consuming devices (31 to 37) and a energy scheduling unit (5) for executing this method. Energy consuming devices (31 to 36) communicate request for energy consumption to an energy scheduling unit. This unit is gathering energy consumption and/or operational data of one or more of the energy consuming devices (31 to 36) of the group (3). It schedules energy consumption with respect to available energy assigned to the group (3) and with respect to gathered energy consumption and/or operational data. Further, it controls the energy consumption of one or more of the energy consuming devices (31 to 37) of the group of energy consuming devices according to the schedule energy consumption.

## Description

The invention relates to a method of managing the energy consumption of a group of energy consuming devices, as well as energy consuming devices of this group of energy consuming devices and an energy scheduling unit for executing this method.

In a traditional model for electric power utilities, an electric power utility serves energy users or customers with its own facilities which includes a generator, a transmission network and a distribution network. A transformer station is connected between the transmission network and the distribution network. Consequently, customer cannot choose between alternative sources of energy and the customer must buy energy from the power utility that operates in its geographic region.

Further, power grids may be organized into control areas which are electrical systems bounded by interconnection metering and telemetry. The load between adjacent control areas is in such case balanced according to a predetermined schedule. If exceed demand for electricity is generated in one control area it will receive electricity from adjacent control areas and the control area that is providing the exceed electricity then bills the other control area for other expenses caused by the deviation.

To avoid such additional expenses caused by deviations, it is known that the operators of the control are perform sophisticated efforts for predicting the energy that will be consumed by the customers in the next week, on the next day and in the next hour.

It is the object of the present invention to improve the predictability of the energy consumed by a customer and therefore help to improve the provision of energy in an energy distribution network having a plurality of energy consuming devices and a plurality of energy resources.

The object of the present invention is achieved by a method of managing energy consumed by a group of energy consuming devices, wherein the method comprising the steps of: communicating requests for energy consumption from one or more of the energy consuming devices of the group of energy consuming devices to an energy scheduling unit and/or to another one of the energy consuming devices of the group; gathering, energy consumption and/or operational data of one or more of the energy consuming devices of the group of energy consuming devices; scheduling energy consumption with respect to available energy assigned to the group of energy consuming devices and with respect to gathered energy consumption and/or operational data; and controlling the energy consumption of one or more of the energy consuming devices of the group of energy consuming devices according to the scheduled energy consumption. The object of the present invention is further achieved by an energy consuming device of a group of energy consuming devices, the energy consuming device having a communication unit for communicating with an energy scheduling unit and a control unit for sending requests for energy consumption via the communication unit to the energy scheduling unit and controlling the energy consumption of the energy consuming devices according to energy consumption scheduled by the energy scheduling unit to the energy consuming device, wherein the energy scheduling unit schedules energy consumption with respect to available energy assigned to the group of energy consuming devices and with respect to gathered energy consumption and/or operational data of one or more of the energy consuming devices of the group of energy consuming devices. The object of the invention is further achieved by an energy scheduling unit for managing energy consumed by a group of energy consuming devices, the energy scheduling device having communication means for receiving requests for energy consumption from one or more of the energy consuming devices of the group of energy consuming devices, control means for gathering energy consumption and/or operational data of one or more of the energy consuming devices of the group of energy consuming devices, for scheduling energy consumption with respect to available energy assigned to the group of energy consumer devices and with respect to gathered energy consumption and/or operational data, and for controlling the energy consumption of one or more of the energy consuming devices of the group of energy consuming devices according to the scheduled energy consumption.

According to the principles of this invention, energy consuming devices of a group of energy consuming devices are equipped with a communication interface to negotiate their energy consumption behavior in order to meet the energy consumption budget assigned to the group of energy consuming devices. The invention makes it possible to shape the energy consumption of the group of energy consuming devices in an excellent way. It performs load balancing between the different energy consuming devices of the group and thereby ensures that the consumer meets its energy consumption budget. Thereby, the invention ensures both, an economical efficient energy consumption of an energy consuming customer as well as a flexible provision of energy according to the consumers needs.

Further advantages are achieved by the embodiments of the invention indicated by the dependent claims.

According to a preferred embodiment of the invention, a central control device implements the energy scheduling unit. The energy consuming devices of the group which are equipped with a communication unit communicate with this central control device for negotiating their energy consumption. Such approach makes it possible for the consumer to centrally set the available energy assigned to the group which approves the user friendness of the system.

But, it is also possible that the energy scheduling unit is implemented in one of the energy consuming devices or represents a logical unit executed by two or more energy consuming devices of the group in a distributed way. Thereby, the energy consuming devices execute a self-organized interoperable distributed power management which does not need a central control device. This approach improves the flexibility of the system. Each device is aware of its power consumption and is equipped with a communication link for requesting power and negotiating the power consumption. The device is self-aware about the usage process and is enabled to negotiate an energy consumption schedule on the fly. The energy consuming device itself comprises means for scheduling, planning and negotiating energy consumption with respect to available energy and with respect to its operational characteristics.

Preferably, the energy schedule unit stores an energy consumption group-profile specifying the available energy assigned to the group of energy consuming devices. Such profile specifies, for example, peak load, basic load (e.g. dependent on time), and maximum rise in a consumption per time unit. When scheduling energy consumption, the energy scheduling unit compares this energy consumption group-profile, which represents the contract between the operator and the consumer, with gathered energy consumption and/or operational data of energy consuming devices that have requested energy consumption. Thereby, it becomes possible to shape the energy consumption of the group in a precious way. Further, it is possible that the energy scheduling unit measures in addition the total energy consumption of the group. When scheduling energy consumption, the energy scheduling unit compares the energy consumption profile with the total energy consumption of the group measured at the moment and with gathered energy consumption and/or operational data of energy consuming devices having requested energy consumption. Thereby, it becomes possible for the scheduling unit to respect the energy consumption of energy consuming devices which are not equipped with a communication interface for communicating energy requests. It is not necessary to equip all the energy consumption devices of the group with a communication unit and a control unit for handling the method according to the invention. This reduces the total costs for implementing the invention.

According to a preferred embodiment of the invention, an energy consuming device communicates an energy consumption profile as energy consumption data to the energy scheduling unit. This energy consumption profile specifies a prediction of the future energy consumption of the energy consuming device. This information enables the energy scheduling unit to respect the future energy consumption of the energy consuming devices within the scheduling process and thereby improves the quality of the scheduling process. Preferably, the energy consuming devices communicate in addition operational data to the energy scheduling unit. This operational data specify whether the energy consumption of the energy consuming device is interruptible or not or specifies at which times of operation the energy consumption of the device can be interrupted or decreased. This additional information is used by the scheduling process to improve the quality of the scheduling result. Further, such data are used by the scheduling process when rescheduling becomes necessary.

But, it is also possible that the energy consuming device measure its energy consumption and communicates the measured energy consumption as energy consumption data to the energy scheduling unit. This approach allows a simple and cheap implementation of the invention. Further, the scheduling process benefits from the proper representation of reality.

According to a further aspect of the invention, different priorities are assigned to different energy consuming devices and/or different requests of energy consuming devices. For example, a high priority is assigned to energy consuming devices which are of high interest for the user and which cannot delay energy consumption without drawbacks for the consumer. Low priorities are assigned to energy consuming devices that can delay energy consumption within a preset time frame, for example a refrigerator, a freezer or a tumble-dryer. Further, energy consuming device can assign different priorities to request for energy consumption dependent on preset criterias, e.g. a refrigerator which cannot longer delay the energy consumption for keeping its temperature within the preset of thresholds.

To ensure a fast adaptation of load balancing to user demands, the energy scheduling unit preferably applies following strategies: The energy scheduling unit tries to reschedule planned energy allocations to energy consumption devices, when receiving a request for energy consumption of high priority. Further, the energy scheduling unit may interrupt or decrease the current energy consumption of energy consuming devices, when receiving such request of high priority.

All the aforementioned preferred aspects of the invention may be applied to both, to energy consumption devices controlled by central control device or to energy consuming devices implementing a self-organized interoperable distributed power management.

These as well as other features and advantages of the invention will be better appreciated by reading the following detailed description of presently preferred exemplary embodiments taken in conjunction with the accompanying drawings of which:
- Fig.: is a block diagram showing an energy scheduling unit and different energy consumption devices according to the invention.

Fig. shows a energy management system with a group 3 of energy consuming devices 31 to 39 and an energy scheduling unit 5. The energy consuming devices 31 to 39 are connected with a power grid 1 connected via a connector 2 with the power distribution network of an electrical power provider. The power grid 1 forms the power distribution network of a customer of this electrical power provider. The power consuming devices 31 to 39 of the group 3 exemplary represents the power consuming devices of this customer. The customer might be any type of customer or a combination of different types of customer, including residential, commercial, and industrial customers. The number and kind of power consuming devices 31 to 39 depend on the type of customer. Exemplary, the invention is in the following described by hand of a management system for a residential customer.

The group 3 of energy consuming devices is composed of a plurality of energy consuming devices wherein Fig. exemplifies different kinds of energy consuming devices 31 and 32, 33 and 34, 35 and 36, 37, 38 and 39. The energy consuming devices 31 to 39 are, for example, performed by various domestic appliances of the customer, for example washing machine, tumble-dryer, refrigerator, freezer, heater, boilers, consumer electronics and lighting.

The energy consumer devices 31 and 32 are in the following exemplified by hand of the energy consuming device 32.

The energy consuming device 32 comprises, beside the typical electrical and mechanical components of the respective type of energy consuming device an electronic circuit. This electronic circuit comprises a microprocessor with various peripheral components, a software program executed by this microprocessor and a communication circuit enabling the communication of the energy consuming device 32 with the energy scheduling unit 5. From functional point of view, the energy consuming device 32 comprises a communication unit 321, a control unit 322, a measurement unit 323 and an energy consuming part 324.

The energy consuming part 324 represents the energy consuming tasks of the energy consuming device 32, for example the functionalities of a washing machine, a refrigerator, a dish washer, a heater or a boiler.

The control unit 322 controls the device-side part of the energy management method executed by the system shown in Fig. Typically, the control unit 323 is constituted by a software program executed on the microprocessor of the energy consuming device 32, which interacts with one or several software programs assigned to the energy consuming part 324 to control the energy consumption of the energy consuming device 32.

The measurement unit 323 measures the energy consumed by the energy consuming device 32 and submits these data to the control unit 322. For example, the measurement unit 323 currently measures the electrical current consumed by the energy consuming device 32. The sensed measurement values are digitized an transmitted as digital value to the control unit 322 which determines by these values the energy that is at the moment consumed by the energy consuming device 32.

The communication unit 321 contains all functionalities for supporting a communication between the control unit 322 and the energy scheduling device 5. Preferably, this communication uses a power line, bluetooth, wireless LAN or LAN based communication service. For example, the control unit 321 comprises the hardware components for implementing a power line transceiver that exchanges data with a correspondent power line transceiver of the energy scheduling device 5 via the power grid 1. Further, the communication unit 321 comprises corresponding software drivers and software programs executing a communication protocol that supports the exchange of data via the transmission channel provided by these transceivers.

Alternatively, the communication unit 321 contains a radio transceiver, software drivers and software programs for exchanging data via a wireless bluetooth or WLAN interface. But, it is also possible that the communication unit 321 uses a different kind of communication service for exchanging data with the energy scheduling unit 5, for example via a telephone network or an IP based network (IP = Internet Protocol).

The energy consuming devices 33 and 34 are in the following described by hand of the energy consuming device 34.

The energy consuming device 34 comprises a communication unit 341, a control unit 342, a storage unit 343 and an energy consuming part 344. The storage unit 343 stores a set of digital data specifying an energy consumption profile of the energy consuming device 34. This energy consuming profile describes the energy consuming behavior of the energy consuming device 34, for example its energy consumption dependent on operational conditions, status and time. It is possible for the control unit 342 to determine by means of these data the energy at the moment consumed by the energy consuming device 34 and to calculate a prediction of the future energy consumption of the energy consuming device 34.

The other components of the energy consuming device 34 provide the functionalities of the corresponding communication unit 321, control unit 322 and energy consuming part 324 of the energy consuming device 332.

The energy consuming devices 34 and 36 are in the following described by hand of the energy consuming device 36.

The energy consuming device 36 comprises a communication unit 361, a control unit 362, a storage unit 363 and an energy consuming part 364. These components provide the functionalities of the corresponding components of the energy consuming device 34, with the difference that the control unit 342 receives from the energy consuming part 364 operational data describing the actual operation status of the energy consuming part 364 and further information specifying whether the energy consumption of the energy consuming part 364 can be interrupted or decreased dependent on the current conditions.

The energy consuming device 37 has a communication unit 371, a control unit 372 and an energy consuming part 374. These components provide the functionalities of the corresponding components of the energy consuming device 32, with the difference that the control unit 372 does not communicate energy consuming or operational data to the energy scheduling unit 5 and solely influence the energy consumption of the energy consuming part 374 dependent on communications received from the energy scheduling unit 5.

The energy consuming devices 38 and 39 do not communicate with the energy scheduling unit 5 and, for example, represent some energy consuming devices which are not equipped according to the invention.

According to a preferred embodiment of the invention the energy scheduling unit 5 is formed by a central control device. This control device comprises an electronic circuit with a microprocessor and various peripheral components, software programs executed by this microprocessor, and input and output means, for example a keypad and a liquid crystal display, for providing a human machine interface to the consumer. The functionalities of the energy scheduling unit 5 are provided by the execution of the software programs by the aforementioned hardware platform. From functional point of view, the energy scheduling unit 5 comprises a communication unit 51, several data bases 52, 53 and 55, control units 54 and 57 and a measurement unit 56.

Further, it is possible that the energy scheduling unit 5 comprises a further communication unit for downloading an energy consumption group profile from a remote terminal or a server assigned to the electrical energy provider of the consumer.

The communication unit 51 is equipped as the communication units 321, 341, 361, and 371 and provides a communication service for communicating with the energy consuming devices 31 to 37. Preferably, the communication unit 51 is capable to communicate with different energy consuming devices via different communication media, i.e. communicate via power line, Bluetooth and WLAN in parallel.

The data base 53 stores energy consumption and/or operational data of one or more of the energy consuming devices 31 to 36 of the group 3. For example, the data base 53 stores data about the energy consumption measured by the measurement unit 323 of the energy consuming devices 31 and 32, stores the energy consumption profiles gathered from the energy consuming devices 33 and 34 and stores energy consumption profiles and operational data provided by the control units of the energy consuming devices 35 and 36.

The data base 52 stores an energy consumption group-profile specifying the available energy assigned to the group 3 of energy consuming devices, namely the available energy assigned to the consumer according to his contract with the electrical energy provider. This profile, for example, specifies a time dependent peak load an basic load arranged between the electrical energy provider and the consumer, possible deviations from the arranged basic load, specific contractual conditions for classes of deviations from a basic profile and the maximum increase of power consumption per time unit. The group-profile stored in the data base 52 may be simple or complex, dependent on the contractual arrangement between the electrical energy provider and the consumer and of the type of consumer served by the energy scheduling unit 5.

The control unit 54 schedules energy consumption with respect to available energy assigned to the group 3 of energy consuming devices and with respect to gathered energy consumption and/or operational data. It receives from the control units of the energy consuming devices 31 to 36 requests for energy consumption. These requests may be simple ones, which only specifies an immediate request for energy, but could be also complex ones, which specifies a priority, a prediction of the future energy consume behavior of the respective energy consuming device and operational data, which for example indicates points of the operation of the respective energy consuming device where the consumption of energy might be interrupted or decreased. Further, the control unit 54 gathers energy consumption and/or operational data of the energy consuming devices 31 to 36 and store these data in the data base 53. This functionality is performed by a function 541. For example, this function accesses energy consumption and/or operational data contained in request for energy and/or gathers these data by a polling procedure executed with the control units of these energy consuming devices. For example, it requests the control unit 322 to transfer the energy consumption measured by the measurement unit 323 at a regularly basis.

Further, the control unit 54 receives data about the total energy consumed by the group 3 from the measurement unit 56. The measurement unit 56 measures, for example, the flow of electrical current at the connector 2 and determines by help of this value the total energy consumed by the energy consuming devices of the consumer. The measurement unit 56 digitizes this value and transmits it to the control unit 54.

The control unit 54 stores the scheduling result in the data base 55. For performing its schedule tasks, the control unit 54 executes function 542, 543 and 544 accessing the data of the data base 55.

The function 542 determines, whether an energy consumption specified in a request for energy consumption fits with the group profile stored in the data base 52 and with the already scheduled and granted energy consumptions stored in the data base 55. It checks, whether the requirements stored in the data base 52 are met at the moment of the grant of the received request and checks, whether these requirements are not conflict in the future with already granted energy requests. Thereby, it can access the data base 53 to better predict the actual and future energy consumption profile of granted energy requests. If the energy requests meets the requirements defined by the information of the data bases 52, 53 and 55, it grants the access and stores the energy request in the data base 55. If these requirements are not met, it transfers the control to the function 543.

The function 543 checks, whether it is possible to reschedule planned energy allocations defined by the granted requests stored in the data base 55 in such a way that possible conflicts may be solved and the request may be granted. Thereby, it access the data of the data base 53 to predict the future behavior of granted energy requests. Further, it checks priority data assigned to request for energy consumption and priority data assigned to the different energy consuming devices 31 to 36. If it is possible to solve the conflict by rescheduling planned energy allocations, the function 543 grants the energy request and executes the necessary amendments in the data base 55. If it is not possible to solve this conflict in this way, the function 543 transfers control to the function 544. The function 544 checks, whether it is possible to solve the conflict by interrupting or decreasing the energy consumption currently consumed by one of the other energy consuming devices. Thereby, it checks the data base 53 and/or the control unit of the respective energy consuming device to determine, whether one of these energy consuming devices is in an operational state that allows interruption or decrease of energy consumption.

For example, a washing machine can stop a stage of the washing program and may delay the start of the spin-dry program. But, the interruption of a hot wash program would lead to energy losses due to cooling and is therefore not allowed to interrupt the energy consumption of the washing machine at this operational state.

For example, the operation of a compressor of a refrigerator or a freezer might be interrupted for a specific time, if the cooling temperature of the refrigerator or freezer does not exceed a predefined critical temperature. If the cooling temperature exceeds such temperature, it is not allowed to stop the operation of the compressor.

For example, a tumble-dryer may be interrupted within predefined time frames.

The function 544 negotiates with the energy consuming devices 31 to 36 such interruption or decrease of energy consumption and changes the energy allocation stored in the data base 55 dependent on the results of this negotiations.

The control unit 57 communicates the scheduling results stored in the data base 55 to the control units of energy consuming devices 31 to 37. For example, it acknowledges and grants a request for energy or gives a message to one of the energy consuming devices 31 to 37, if it is time to start or to stop with the energy consumption. The control unit triggers its respective power consumption part to start or stops with the consumption of energy.

According to a further embodiment of the invention, the energy scheduling unit 5 is incorporated in one of the control units of the energy consuming devices 31 to 37 or implemented as distributed logic distributed over the control units of the energy consuming devices 31 to 36. In such case, the energy consuming devices 31 to 37 do not longer communicate with a central control device, but communicate with each other and negotiate by help of the distributed functionalities of the energy scheduling unit 5 the energy consumption with respect to available energy assigned to the group 3 and with respect to the gathered energy consumption and/or operational data.

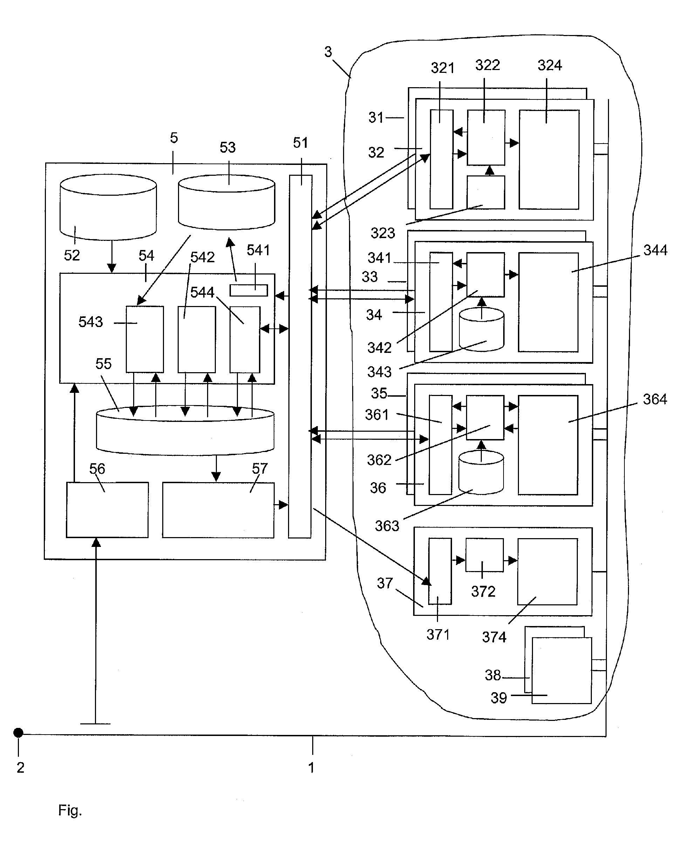

## Claims

1. A method of managing energy consumed by a group (3) of energy consuming devices (31 to 39), the method comprising the steps of: communicating requests for energy consumption from one or more of the energy consuming devices (31 to 36) of the group (3) of energy consuming devices to an energy scheduling unit (5) and/or to one of the other energy consuming devices of the group;
gathering energy consumption and/or operational data of one or more of the energy consuming devices (31 to 36) of the group (3) of energy consuming devices;
scheduling energy consumption with respect to available energy assigned to the group (3) of energy consuming devices and with respect to gathered energy consumption and/or operational data (53); and
controlling the energy consumption of one or more of the energy consuming devices (31 to 36) of the group (3) of energy consuming devices according to the scheduled energy consumption.

2. The method of claim 1,
**characterized in**
**that** the energy scheduling unit (5) stores an energy consumption group-profile (52) specifying the available energy assigned to the group (3) of energy consuming devices and the energy scheduling unit (5) compares the energy consumption group-profile (52) with gathered energy consumption and/or operational data of energy consuming devices (31 to 36) having requested energy consumption, when scheduling energy consumption.

3. The method of claim 1,
**characterized in**
**that** the energy scheduling unit (5) measures the total energy consumption of the group (3) and compares the measured energy consumption with the energy consumption group-profile (52) and gathers energy consumption and/or operational data (53) of energy consuming devices having requested energy consumption, when scheduling energy consumption.

4. The method of claim 1,
**characterized in**
**that** the method comprising the further steps of assigning different priorities to different energy consuming devices and/or different requests of energy consuming devices; and respecting these priorities when scheduling energy consumption.

5. The method of claim 4,
**characterized in**
**that** the method comprising the further step of rescheduling planned energy allocations to energy consumption devices or interrupting or decreasing the current energy consumption of energy consumption devices when receiving a request for energy consumption of high priority.

6. The method of claim 1,
**characterized in**
**that** the energy consuming device (31, 32) measures its energy consumption and communicate the measured energy consumption as energy consumption data to the energy scheduling unit (5).

7. The method of claim 1,
**characterized in**
**that** the energy consuming device (31, 32, 35, 36) communicates an energy consumption profile as energy consumption data to the energy scheduling unit (5), the energy consumption profile specifies a prediction of its future energy consumption.

8. The method of claim 1,
**characterized in**
**that** the energy consuming device (35, 36) communicates operational data to the energy scheduling unit (5), the operational data specifying whether the energy consumption of the energy consuming device (35, 36) is interruptible or not.

9. An energy consuming device (31 to 35) of a group (3) of energy consuming devices (31 to 39), the energy consuming device (31 to 36) having a communication unit (321, 341, 361) for communicating requests for energy, and a control unit (322, 342, 362) for sending requests for energy consumption (32, 241, 361) to an energy scheduling unit (5) and controlling the energy consumption of the energy consuming devices (31 to 36) according to energy consumption scheduled by the energy scheduling unit (5) to the energy consuming devices, wherein the energy scheduling unit (5) schedules energy consumption with respect to available energy assigned to the group (5) of energy consuming devices and with respect to gathered energy consumption and/or operational data (53) of one or more of the energy consuming devices of the group of energy consuming devices.

10. An energy scheduling unit (5) for managing energy consumed by a group (3) of energy consuming devices (31 to 39), the energy scheduling device (5) having communication means (51) for receiving requests for energy consumption from one or more of the energy consuming devices (31 to 36) of the group (3) of energy consuming devices, for scheduling energy consumption with respect to available energy assigned to the group (3) of energy consuming devices and with respect to gathered energy consumption and/or operational data, and for controlling the energy consumption of one or more of the energy consuming devices (31 to 37) of the group (3) of energy consuming devices according to the scheduled energy consumption.
